# EUROPÄISCHE PATENTSCHRIFT

(11) **EP 2 353 390 B1**
(45) Veröffentlichungstag und Bekanntmachung des Hinweises auf die Patenterteilung: **02.01.2019**
(21) Anmeldenummer: 11152388.2
(22) Anmeldetag: 27.01.2011
(51) Int. Cl.: A21C 5/04, A21C 5/02

(54) **Teilkammerträger für eine Teigteilmaschine**
Dividing chamber holder for a dough dividing machine
Support de chambre de séparation pour une machine de séparation de pâte

(30) Priorität: 08.02.2010 DE 102010007307
(43) Veröffentlichungstag der Anmeldung: 10.08.2011
(73) Patentinhaber: Fortuna Maschinenbau Holding AG, 96231 Bad Staffelstein (DE)
(72) Erfinder: Moritz, Alexander, 96250 Ebensfeld (DE)
(74) Vertreter: Schröer, Gernot H.

(56) Entgegenhaltungen:
- EP-A1- 0 494 367
- DE-A1- 4 212 759

## Beschreibung

Die vorliegende Erfindung bezieht sich auf einen Teilkammerträger für eine Teigteilmaschine, umfassend zumindest eine ein Teilkammervolumen definierende Teilkammer mit darin geführtem ersten Messkolben, der zum Abteilen von Teigvolumen antreibbar ist, und wenigstens eine in die Teilkammer einsetzbare und in dieser arretierbare, das Teilkammervolumen reduzierende Hülse mit darin geführtem zweiten Messkolben.

Teigteilmaschinen dienen dazu, aus einer Teigrohmasse vorportionierte Teigrohlinge zu erzeugen, die daraufhin normalerweise einer Wirkvorrichtung zugeführt werden, um diese in eine für die Endbearbeitung gewünschte Form zu bringen.

Beispielsweise offenbart die DE-A-35 30 724 eine Teigteilmaschine mit einem Teilkammerträger, der mit seiner Stirnseite gegenüber dem Auslass einer Teigzuführung hin- und herbeweglich ist und mehrere Teilkammervolumen definierende Teilkammern mit darin geführtem Messkolben aufweist, die zum Abteilen von Teigvolumen dienen. Das Volumen und somit das Gewicht der mit der Teigteilmaschine herstellbaren Teigrohlinge wird zum einen durch die Teilkammervolumen der jeweiligen Teilkammern und zum anderen durch den Hub der darin geführten Messkolben bestimmt. Entsprechend lässt sich das Teigrohlingvolumen durch Verändern des Hubs der einzelnen Messkolben variieren. Dies ist allerdings nur sehr bedingt möglich, da für ein gutes Wirkergebnis der Teigrohlinge in der sich an den Teilkammerträger anschließenden Wirkvorrichtung auch die Form der abgeteilten Teigrohlinge von entscheidender Bedeutung ist, wobei ein Verhältnis von Höhe zu Durchmesser des Teigrohlings von etwa 1 als optimal angesehen wird. Zur Erzielung größerer Teigrohlingvolumenänderungen muss der Teilkammerträger zur Sicherstellung eines weiterhin guten Wirkergebnisses daher vollständig durch einen Teilkammerträger ersetzt werden, dessen Teilkammern das entsprechende Teilkammervolumen aufweisen. Die Herstellung und Bevorratung einer Vielzahl von Teilkammerträgern ist jedoch sehr kostspielig und lagerintensiv.

Zur Lösung dieser Problematik schlägt die EP-A-0 494 367 eine Teigteilmaschine mit einem Teilkammerträger vor, der mehrere, jeweils ein Teilkammervolumen definierende Teilkammern mit darin geführten Doppel-Messkolben aufweist, wobei der äußere Hauptkolben als Kolbenbüchse gestaltet ist, der wahlweise ein innerer kleinerer Kolben zur Abteilung von kleinen Teigvolumen oder im verriegelten Zustand mit der Kolbenbüchse zur Abteilung von großen Teigvolumen antreibbar ist. Mit anderen Worten kann der Durchmesser der Teilkammern entweder auf den Durchmesser der Kolbenbüchse oder auf den Durchmesser des kleinen Messkolbens eingestellt werden, so dass Teigrohlinge mit im Wesentlichen zwei unterschiedlichen Teigvolumen von einer Teigrohmasse abgetrennt werden können. Nachteilig sind allerdings der komplexe Aufbau des Teilkammerträgers und die Tatsache, dass im Wesentlichen nur zwischen zwei Teigvolumen gewählt werden kann.

Ausgehend von diesem Stand der Technik ist es eine Aufgabe der vorliegenden Erfindung, einen Teilkammerträger der eingangs genannten Art zu schaffen, der einen alternativen, einfachen und preiswerten Aufbau aufweist und mit dem sich wahlweise unterschiedlichste Teigvolumen aus einer Teigrohmasse abteilen lassen.

Zur Lösung dieser Aufgabe schafft die vorliegende Erfindung einen Teilkammerträger der eingangs genannten Art, der dadurch gekennzeichnet ist, dass der erste Messkolben und die Hülse mit darin geführtem zweiten Messkolben als separate und gegeneinander austauschbare Komponenten vorgesehen sind.

Sollen mit dem erfindungsgemäßen Teilkammerträger also Teigrohlinge von einer Teigmasse abgetrennt werden, deren Teigvolumen dem mit dem Teilkammerträger maximal herstellbaren Teigvolumen entspricht, so wird der erste Messkolben in die Teilkammer eingesetzt und der Messkolbenhub zur Erzielung eines Verhältnisses von Teigrohlingdurchmesser zu Teigrohlinghöhe von etwa 1 eingestellt. Sollen hingegen Teigrohlinge mit einem kleineren Teigvolumen abgeteilt werden, so wird eine das Teilkammervolumen entsprechend reduzierende Hülse mit darin geführtem zweiten Messkolben in die Teilkammer eingesetzt und in dieser arretiert. Nach dem Einstellen eines Messkolbenhubs des zweiten Messkolbens zur Erzielung eines Verhältnisses von Teilrohlingdurchmesser zur Teigrohlinghöhe von etwa 1 lassen sich daraufhin dann Teigrohlinge mit entsprechend verringertem Teigvolumen abteilen. Soll noch ein anderes Teigvolumen mithilfe des erfindungsgemäßen Teilkammerträgers abgeteilt werden, so wird die Hülse mit dem darin geführten zweiten Messkolben durch eine weitere Hülse mit darin geführtem dritten Messkolben ausgetauscht, wobei die weitere Hülse das Teilkammervolumen entsprechend dem herzustellenden Teigvolumen reduziert.

Aufgrund der Tatsache, dass zur Herstellung von Teigrohlingen mit verschiedenen Teigvolumen im Gegensatz zur DE-A-35 30 724 nicht der gesamte Teilkammerträger sondern lediglich der erste Messkolben durch die Hülse mit dem darin geführten zweiten Messkolben ausgetauscht werden muss oder umgekehrt, ist der Aufbau des Teilkammerträgers vergleichsweise preiswert. Gegenüber den in der EP-A-0 494 367 vorgeschlagenen Doppel-Messkolben ist der Aufbau des erfindungsgemäßen Teilkammerträgers vergleichsweise einfach und entsprechend preiswert herzustellen. Darüber hinaus kann das Volumen der abzuteilenden Teigrohlinge im größeren Umfang ohne großen konstruktiven Aufwand variiert werden.

Gemäß einer Ausgestaltung der vorliegenden Erfindung weist der erste Messkolben einen vorderen Messkolbenbereich mit einem einen ersten Messkolbendurchmesser aufweisenden kreisförmigen Querschnitt und einen mittleren Messkolbenbereich mit einem einen zweiten Messkolbendurchmesser aufweisenden kreisförmigen Querschnitt auf, wobei der zweite Querschnitt kleiner als der erste Querschnitt ist. Aufgrund der Tatsache, dass der Querschnitt des mittleren Messkolbenbereiches kleiner als derjenige des vorderen Messkolbenbereiches ist, ist die Außenkontur des mittleren Messkolbenbereiches im Gegensatz zu demjenigen des vorderen Messkolbenbereiches nicht mit der Wand der zugeordneten Teilkammer in Kontakt, wodurch Reibung vermieden oder zumindest in erheblichem Maß reduziert wird. Dies ist von besonderer Bedeutung, wenn sich Teig zwischen die Außenkontur des Messkolbens und die Wand der zugeordneten Teilkammer setzt, was in der Praxis kaum zu verhindern ist. Dadurch wird der Messkolben schwergängig, was zu Volumen- bzw. Gewichtsdifferenzen der Teigrohlinge führt, da der Kolbenhub nur durch den die von der zugeführten Teigmasse ausgeübten Druck bewirkt wird. Darüber hinaus kann sich der Messkolben bei zu hoher Reibung derart erwärmen und ausdehnen, dass er letztendlich in der zugeordneten Teilkammer blockiert.

Gemäß einer alternativen Ausgestaltung weist der mittlere Messkolbenbereich des ersten Messkolbens keinen kreisförmigen sondern einen polygonalen Querschnitt auf, der insbesondere Konturabschnitte umfasst, die auf einem Kreisbogen mit dem ersten Messkolbendurchmesser liegen. Mit anderen Worten liegt die Außenkontur eines solchen mit einem polygonalen Querschnitt versehenen mittleren Messkolbenbereiches abschnittweise an der Wand der zugeordneten Teilkammer an, so dass der erste Messkolben auch in seinem mittleren Messkolbenbereich eine Abstützung erfährt. Auf diese Weise kann die Entstehung von auf den ersten Messkolben wirkenden Kippmomenten vermieden werden.

Am Außenumfang des ersten Messkolbens ist bevorzugt eine sich in Längsrichtung des ersten Messkolbens erstreckende Messkolbennut ausgebildet, in die beispielsweise ein von außen durch die zugeordnete Teilkammer geführter Bolzen eingreift, so dass der erste Messkolben während seiner Bewegung innerhalb der zugeordneten Teilkammer linear geführt und gegen ein Verdrehen gesichert ist.

Am freien Ende des ersten Messkolbens ist vorteilhaft ein Messkolbenflansch ausgebildet, an dem insbesondere eine Werkzeugeingrifföffnung vorgesehen ist. Der Messkolbenflansch wirkt als Anschlag und definiert diejenige Position des ersten Messkolbens, in der dieser vollständig in die zugeordnete Teilkammer eingesetzt ist. Die Werkzeugeingrifföffnung ist vorteilhaft unmittelbar angrenzend an die zugeordnete Teilkammer vorgesehen, so dass in diese beispielsweise ein Aushebewerkzeug eingesetzt werden kann, um den ersten Messkolben aus der entsprechenden Teilkammer zu hebeln, wenn dieser beispielsweise zu reinigen oder auszutauschen ist.

Am Außenumfang der Hülse ist bevorzugt eine sich in Längsrichtung der Hülse erstreckende Hülsennut ausgebildet, in die analog zur Messkolbennut ein von außen durch die zugeordnete Teilkammer geführter Bolzen greift und die in die Teilkammer eingesetzte Hülse gegen Verdrehen sichert.

Am freien Ende der Hülse ist analog zum ersten Messkolben bevorzugt ein Hülsenflansch ausgebildet, an dem insbesondere eine Werkzeugeingriffsöffnung vorgesehen ist.

Zur Arretierung der Hülse in der Teilkammer ist gemäß einer Ausgestaltung der vorliegenden Erfindung ein eine insbesondere mit einer Schrägfläche versehene Hülsenrastöffnung definierendes, bevorzugt aus Metall hergestelltes Hülseneinsetzteil in eine entsprechende am Außenumfang der Hülse vorgesehene Hülseneinsetzöffnung eingesetzt. In die Hülsenrastöffnung des Hülseneinsatzteils greift zur Festsetzung der Hülse innerhalb der Teilkammer beispielsweise ein von außen durch die Teilkammer geführter Rastbolzen.

Gemäß einer weiteren Ausgestaltung der vorliegenden Erfindung ist ferner ein Absperrkolben vorgesehen, der zur Blockierung einer Teilkammer dient. Ein solcher Absperrkolben wird eingesetzt, wenn man die Anzahl der aktiven Teilkammern des Teilkammerträgers verringern will, also wenn beispielsweise ein Kunde einen mit sechs in Reihe angeordneten Teilkammern versehenen Teilkammerträger aus Gründen der Blechbelegung bei Produkten, die lang gerollt werden sollen, nur mit fünf Teilkammern betreiben möchte. Grundsätzlich lässt sich jede Teilkammer blockieren. Auch können mehrere Teilkammern gleichzeitig blockiert werden.

Am freien Ende des Absperrkolbens ist analog zum ersten Messkolben bevorzugt ein Absperrkolbenflansch ausgebildet, an dem insbesondere eine Werkzeugeingrifföffnung vorgesehen ist.

Zur Arretierung des Absperrkolbens in der Teilkammer ist vorteilhaft ein eine insbesondere mit einer Schrägfläche versehene Absperrkolbenrastöffnung definierendes, bevorzugt aus Metall hergestelltes Absperrkolbeneinsetzteil in eine entsprechende, am Außenumfang des Absperrkolbens vorgesehene Absperrkolbeneinsetzöffnung eingesetzt. In die Absperrkolbenrastöffnung des Absperrkolbeneinsetzteils kann analog zur Hülsenrastöffnung der Hülse beispielsweise ein von außen durch die Teilkammer geführter Rastbolzen eingeführt werden.

Der in der Hülse geführte zweite Messkolben weist am Außenumfang bevorzugt eine sich in Längsrichtung des Messkolbens erstreckende Führungsaussparung auf, die einen sich quer zur Längsrichtung erstreckenden Verriegelungsstift aufnimmt und führt, der an der Hülse festgelegt ist. Auf diese Weise kann ein Verdrehen des zweiten Messkolbens innerhalb der Hülse verhindert werden.

Die Führungsaussparung wird bevorzugt durch einen mittleren Bereich des zweiten Messkolbens mit polygonalem Querschnitt gebildet, wobei der polygonale Querschnitt zusammen mit dem Verriegelungsstift bevorzugt eine eindeutige Positionierung des zweiten Messkolbens innerhalb der Hülse definiert. Darüber hinaus wird durch das Vorsehen eines mittleren Bereiches mit polygonalem Querschnitt die Reibung zwischen dem zweiten Messkolben und der Hülse verringert, wodurch diejenigen Vorteile erzielt werden, die bereits zuvor in Bezug auf den polygonalen mittleren Messkolbenbereich des ersten Messkolbens beschrieben wurden. Auch der mittlere Bereich des zweiten Messkolbens kann Konturabschnitte aufweisen, die mit der Wand der Hülse in Kontakt stehen, wodurch ein Stützeffekt erzielt wird, der ein auf den zweiten Messkolben wirkendes Kippmoment verhindert oder zumindest reduziert.

Der Verriegelungsstift ist bevorzugt in einer sich senkantenartig durch die Hülse, insbesondere durch den Flansch der Hülse erstreckenden Aufnahmebohrung aufgenommen. Hierdurch ergibt sich ein einfacher Aufbau.

Der Verriegelungsstift kann durch einen Gewindestift festlegbar sein, der in einer sich quer zur Aufnahmebohrung erstreckenden, in der Hülse vorgesehenen Gewindebohrung aufgenommen ist und in eine im Bereich des freien Endes des Verriegelungsstiftes vorgesehene Umfangsnut eingreift.

Der in der Hülse geführte zweite Messkolben ist bevorzugt aus Polyoxymethylen (POM) hergestellt und/oder die Hülse besteht bevorzugt aus Polyethylenterephthalat (PET).

Die Stirnfläche des ersten Messkolbens und/oder der Hülse und/oder des zweiten Messkolbens und/oder des Absperrkolbens ist/sind vorteilhaft an die unmittelbar angrenzenden Bereiche der Außenkontur des Teilkammerträgers formangepasst.

Die Differenz zwischen dem Außenradius und dem Innenradius der Hülse liegt bevorzugt im Bereich von 7,5 bis 25 mm.

Weitere Merkmale und Vorteile der Erfindung werden anhand der nachfolgenden Beschreibung einer bevorzugten Ausführungsform eines erfindungsgemäßen Teilkammerträgers unter Bezugnahme auf die beiliegende Zeichnung deutlich. Darin ist:
- FIG 1: eine teilweise geschnittene Vorderansicht eines wellenförmig ausgebildeten Teilkammerträgers gemäß einer Ausführungsform der vorliegenden Erfindung;
- FIG 2: eine Seitenansicht des in FIG 1 dargestellten Teilkammerträgers;
- FIG 3: eine gegenüber FIG 1 um 90° gedrehte Vorderansicht des Teilkammerträgers;
- FIG 4: eine vergrößerte Ansicht des in FIG 3 mit dem Bezugszeichen IV gekennzeichneten Ausschnittes, wobei Rastbolzen und Absperrriegel an dem Teilkammerträger vorgesehen sind;
- FIG 5: eine schematische Ansicht, die einen ersten Messkolben des in den FIGen 1 bis 4 dargestellten Teilkammerträgers im in eine Teilkammer des Teilkammerträgers eingesetzten Zustand zeigt;
- FIG 6: eine Querschnittansicht des in FIG 5 dargestellten ersten Messkolbens entlang der Linie VI-VI in FIG 5;
- FIG 7: eine Querschnittansicht einer Hülse des in den FIG 1 bis 4 dargestellten Teilkammerträgers mit darin eingesetztem zweiten Messkolben;
- FIG 8: eine Querschnittansicht entlang der Linie VIII-VIII in FIG 7;
- FIG 9: eine Querschnittansicht entlang der Linie IX-IX in FIG 7;
- FIG 10: eine Querschnittansicht eines Hülseneinsetzteils der in den FIG 7 bis 9 dargestellten Hülse;
- FIG 11: eine Schnittansicht entlang der Linie XI-XI in FIG 10;
- FIG 12: eine Draufsicht des in FIG 10 dargestellten Hülseneinsetzteils;
- FIG 13: eine Vorderansicht eines zweiten Messkolbens gemäß einer alternativen Ausführungsform der vorliegenden Erfindung;
- FIG 14: eine Schnittansicht entlang der Linie XIV-XIV in FIG 13;
- FIG 15: eine Schnittansicht entlang der Linie XV-XV in FIG 13;
- FIG 16: eine perspektivische Ansicht des in den FIG 13 bis 15 dargestellten zweiten Messkolbens;
- FIG 17: eine Vorderansicht eines Absperrkolbens des in den FIG 1 bis 4 dargestellten Teilkammerträgers;
- FIG 18: eine Schnittansicht entlang der Linie XVIII-XVIII in FIG 17;
- FIG 19: eine gegenüber der in FIG 17 dargestellten Vorderansicht um 90° gedrehte Vorderansicht des Absperrkolbens und
- FIG 20: eine perspektivische Darstellung des Absperrkolbens.

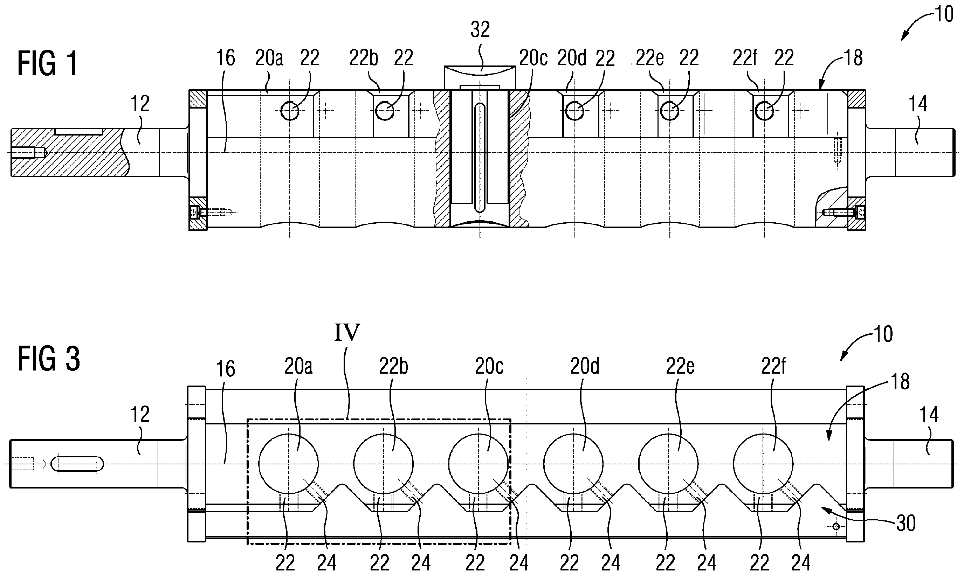

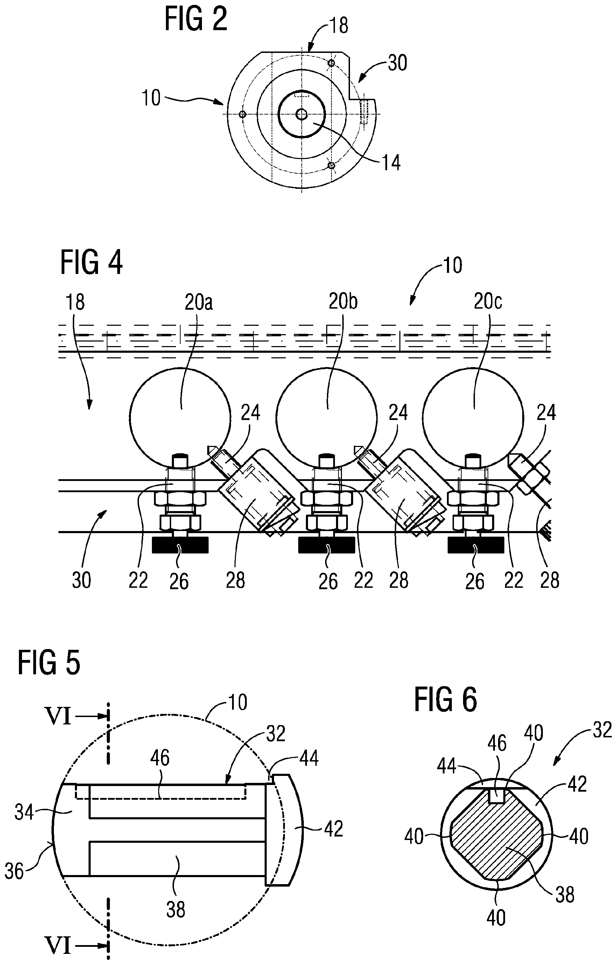

Die FIG 1 bis 3 zeigen einen Teilkammerträger 10 gemäß einer ersten Ausführungsform der vorliegenden Erfindung, der ein Bauteil einer nicht näher dargestellten Teigteilmaschine darstellt. Der Teilkammerträger 10 ist im Wesentlichen zylindrisch ausgebildet und an zwei stirnseitig angeordneten Drehzapfen 12 und 14 drehend um eine Drehachse 16 gehalten. An einem abgeflachten und eben ausgebildeten Außenumfangsbereich 18 des Teilkammerträgers 10 sind nebeneinander in Reihe sechs Teilkammern 20a, b, c, d, e und f in Form von sich durch den Teilkammerträger 10 erstreckenden zylindrischen Durchgangsbohrungen vorgesehen. Ausgehend vom Außenumfang des Teilkammerträgers 10 erstrecken sich in jede Teilkammer 20a, b, c, d, e, f zwei vorliegend um 45° zueinander versetzte Gewindebohrungen 22 und 24, wobei jede Gewindebohrung 22 zur Aufnahme eines Rastbolzens 26 und jede Gewindebohrung 24 zur Aufnahme eines Absperrriegels 28 dient, die in FIG 4 dargestellt sind und deren Funktion nachfolgend noch näher erläutert wird. Zur Schaffung des erforderlichen Bauraums zur Aufnahme der Rastbolzen 26 und der Absperrriegel 28 ist am Außenumfang des Teilkammerträgers 10 eine entsprechend gestaltete Ausnehmung 30 vorgesehen.

Jede Teilkammer 20a, b, c, d, e, f dient zur Aufnahme eines ersten Messkolbens, wobei in FIG 1 nur ein einzelner erster Messkolben 32 dargestellt ist. Alternativ können in die Teilkammern 20a, b, c, d, e, f auch eine einen zweiten Messkolben aufnehmende Hülse oder ein Absperrkolben eingesetzt werden, wie es nachfolgend noch näher erläutert wird.

Die FIG 5 und 6 zeigen einen ersten Messkolben 32 im Detail. Der erste Messkolben 32 umfasst einen vorderen, im Querschnitt kreisförmigen Messkolbenbereich 34, dessen Durchmesser geringfügig kleiner als derjenige der zugeordneten Teilkammer 20a, b, c, d, e, f ist und dessen Stirnseite 36 an die unmittelbar angrenzenden Bereiche der Außenkontur des Teilkammerträgers 10 formangepasst ist. An den vorderen Messkolbenbereich 34 schließt sich ein mittlerer Messkolbenbereich 38 mit im Wesentlichen viereckigem Querschnitt an, wobei die Ecken des viereckigen Querschnitts derart abgerundet sind, dass Konturabschnitte 40 vorhanden sind, die auf einem Kreisbogen mit dem Durchmesser des vorderen Messkolbenbereiches 34 liegen. An den mittleren Messkolbenbereich 38 schließt sich ein Messkolbenflansch 42 an, an dem eine Werkzeugeingrifföffnung 44 vorgesehen ist. Am Außenumfang des ersten Messkolbens 32 erstreckt sich über Teile des vorderen Messkolbenbereichs 34 und über Teile des mittleren Messkolbenbereiches 38 eine sich in Längsrichtung des ersten Messkolbens 32 erstreckende Messkolbennut 46.

In demjenigen Zustand, in dem der erste Messkolben 32 in die zugehörige Teilkammer 20a, b, c, d, e, f des Teilkammerträgers 10 vollständig eingesetzt ist, wie es in FIG 5 angedeutet ist, stützen sich der vordere Messkolbenbereich 34 sowie die Konturabschnitte 40 des mittleren Messkolbenbereiches 38 an der Wand der zugehörigen Teilkammer 20a, b, c, d, e, f ab, so dass der erste Messkolben 32 ohne Erzeugung nennenswerter Kippmomente und bei geringer Reibung innerhalb der zugehörigen Teilkammer 20a, b, c, d, e, f hin- und herbeweglich verschiebbar ist. In vollständig eingesetztem Zustand schließt die Stirnfläche 36 des ersten Messkolbens 32 im Wesentlichen bündig mit der Außenkontur des Teilkammerträger 10 ab. In die Messkolbennut 46 greift der in die entsprechende Bohrung 22 geschraubte Rastbolzen 26 ein, wodurch ein Verdrehen des ersten Messkolbens 32 innerhalb der zugehörigen Teilkammer 20a, b, c, d, e, f verhindert wird.

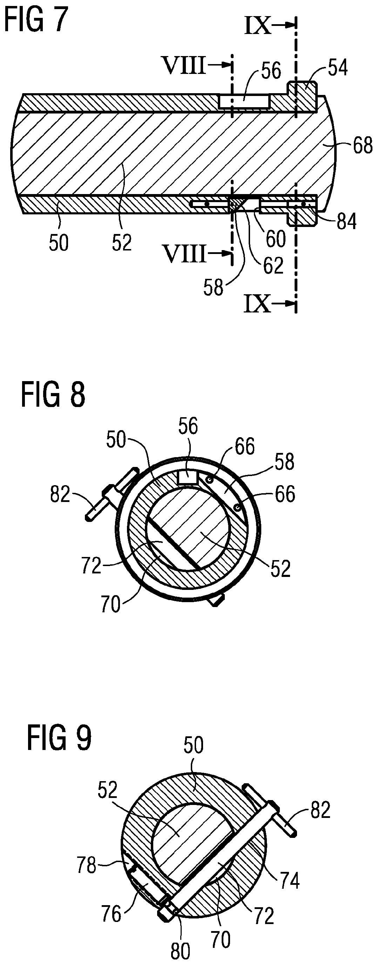

Die FIG 7 bis 9 zeigen eine Hülse 50 mit darin geführtem zweiten Messkolben 52.

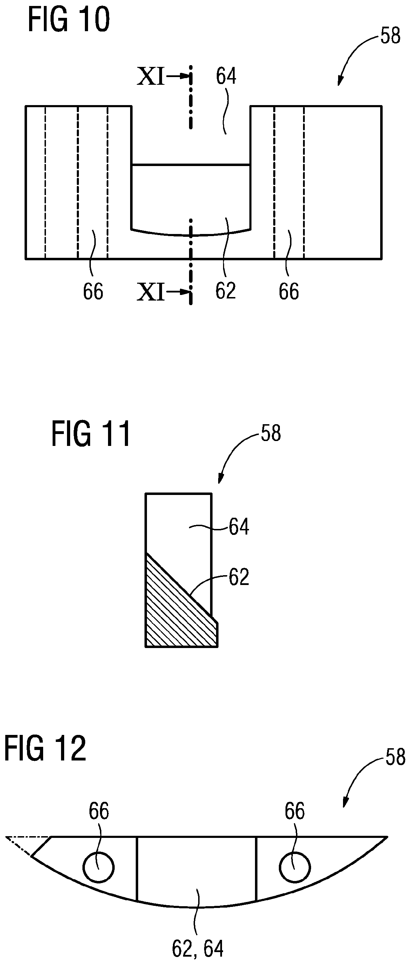

Die Hülse 50 ist aus PET hergestellt und weist eine im Wesentlichen zylindrische Form auf. Am freien Ende der Hülse 50 ist analog zum ersten Messkolben 32 ein Hülsenflansch 54 ausgebildet. Am Außenumfang der Hülse 50 ist eine sich in Längsrichtung der Hülse 50 erstreckende Hülsennut 56 vorgesehen. Zur Arretierung der Hülse 50 in einer der Teilkammern 20a, b, c, d, e, f ist ein aus Metall hergestelltes Hülseneinsetzteil 58, das genauer in den FIG 10 bis 12 dargestellt ist, in eine entsprechende, am Außenumfang der Hülse 50 vorgesehene Hülseneinsetzöffnung 60 eingesetzt. Das Hülseneinsetzteil 58 ist mit einer eine Schrägfläche 62 definierenden Hülsenrastöffnung 64 versehen, und die Außenkontur des Hülseneinsetzteils 58 schließt im in die Hülseneinsetzöffnung 60 der Hülse 50 eingesetzten Zustand mit der Außenkontur der Hülse 50 bündig ab. Das Hülseneinsetzteil 58 ist mit zwei Durchgangsbohrungen 66 versehen, die zur Aufnahme von Gewindestiften zur Fixierung des Hülseneinsetzteils 58 an der Hülse 50 vorgesehen sind.

Der zweite Messkolben 52 ist aus POM hergestellt, weist eine im Wesentlichen zylindrische Form auf und ist an seinem freien Ende mit einem Messkolbenflansch 68 versehen. Von seiner im Wesentlichen zylindrischen Form abweichend weist der zweite Messkolben 54 am Außenumfang eine sich in Längsrichtung des Messkolbens 52 erstreckende Führungsaussparung 70 auf, die einen sich quer zur Längsrichtung erstreckenden Verriegelungsstift 72 aufnimmt und führt, der an der Hülse 50 festgelegt ist. Der Verriegelungsstift 72 ist in einer in die Hülse 50 im Bereich des Hülsenflansches 54 eingebrachte Aufnahmebohrung 74 eingesetzt und durch einen Gewindestift 76 festgelegt, der in einer sich quer zur Aufnahmebohrung 74 erstreckenden, in der Hülse 50 vorgesehenen Gewindebohrung 78 aufgenommen ist und in eine im Bereich des freien Endes des Verriegelungsstiftes 72 vorgesehene Umfangsnut 80 eingreift. Zur Vereinfachung der Handhabung des Verriegelungsstiftes 72 ist dieser an dem der Umfangsnut 80 gegenüberliegenden freien Ende mit einem sich quer erstreckenden Betätigungsstift 82 versehen, der von einem Benutzer gut gegriffen werden kann.

Im Rahmen einer Vormontage wird zunächst das Hülseneinsetzteil 58 in die Hülseneinsatzöffnung 60 eingesetzt und mittels an der Hülse 50 vorgesehene Gewindebohrungen 84 und Bohrungen 86 eingesetzte Gewindestifte (nicht gezeigt) an der Hülse 50 festgelegt. Daraufhin wird der zweite Messkolben 52 in die Hülse 50 eingesetzt. Der Verriegelungsstift 72 wird dann in die Aufnahmebohrung 74 eingeschoben und über den Gewindestift 76 fixiert. Entsprechend verhindert der Verriegelungsstift 72 eine Drehbewegung des zweiten Messkolbens 52 innerhalb der Hülse 50.

Soll nunmehr das Volumen einer Teilkammer 20a, b, c, d, e, f reduziert werden, so wird zunächst der in den FIG 5 und 6 dargestellte erste Messkolben 32 aus der entsprechenden Teilkammer 20a, b, c, d, e, f entnommen. Daraufhin wird die Hülse 50 mit dem darin aufgenommenen zweiten Messkolben 52 in die zugeordnete Teilkammer 20a, b, c, d, e, f eingesetzt. Der Rastbolzen 26 wird in die Hülsennut 56 geführt, so dass sich die Hülse 50 nicht innerhalb der Teilkammer 20a, b, c, d, e, f verdrehen kann. Darüber hinaus wird der Absperrriegel 28 in die Hülsenrastöffnung 64 des Hülseneinsetzteils 58 eingerastet, wodurch eine Fixierung der Hülse 50 innerhalb der Teilkammer 20a, b, c, d, e, f erfolgt. Nunmehr kann der zweite Messkolben 52 die Funktion des ersten Messkolbens 32 unter Reduzierung des Volumens übernehmen. Der Hub des zweiten Messkolbens 52 wird an den Innendurchmesser der Hülse 50 angepasst, so dass Teigrohlinge mit einem Verhältnis von Durchmesser zu Höhe von etwa 1 erzielt werden.

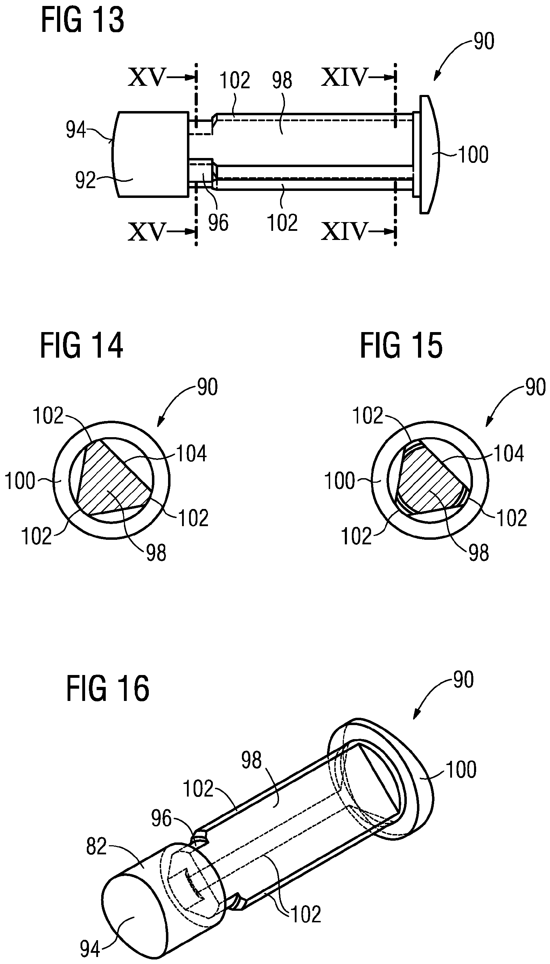

Die FIG 13 bis 16 zeigen einen zweiten Messkolben 90 gemäß einer alternativen Ausgestaltung der vorliegenden Erfindung, der analog zum zweiten Messkolben 52 in die in den FIG 8 bis 9 dargestellte Hülse eingesetzt und bewegbar in dieser geführt werden kann. Der zweite Messkolben 90 umfasst einen vorderen, im Wesentlichen zylindrischen Messkolbenbereich 92, dessen Stirnseite 94 an die Außenkontur unmittelbar angrenzender Bereiche des Teilkammerträgers 10 formangepasst ist, einen sich an den vorderen Messkolbenbereich 92 anschließenden Übergangsbereich 96, einen sich an diesen anschließenden mittleren Messkolbenbereich 98 und einen sich an den mittleren Messkolbenbereich 98 anschließenden Messkolbenflansch 100. Der mittlere Messkolbenbereich 98 weist einen asymmetrischen, im Wesentlichen dreieckigen Querschnitt auf und umfasst Konturabschnitte 102, die auf einem Kreisbogen liegen, dessen Durchmesser demjenigen des vorderen Messkolbenbereichs 92 entspricht. Entsprechend stützen sich die Konturabschnitte 102 an der Innenwand der Hülse 50 ab, wodurch das Auftreten von Biegemomenten verhindert oder zumindest reduziert wird. Der asymmetrische Querschnitt des mittleren Messkolbenbereiches 98 führt dazu, dass die Querschnittfläche 104 gemeinsam mit dem Verriegelungsstift 72 eine eindeutige Positionierung des zweiten Messkolbens 90 innerhalb der Hülse 50 definiert.

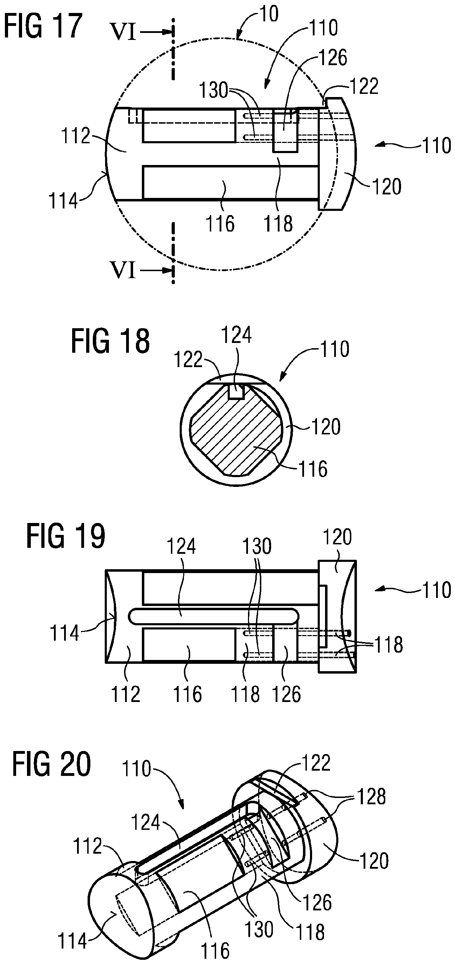

Die FIG 17 bis 20 zeigen einen Absperrkolben 110 gemäß einer Ausführungsform der vorliegenden Erfindung, der zum Blockieren einer Teilkammer 20a, b, c, d, e, f anstelle des ersten Messkolbens 32 oder der Hülse 50 mit darin angeordneten zweiten Messkolben 52 oder 90 eingesetzt werden kann. Der Absperrkolben 110 umfasst einen vorderen Absperrkolbenbereich 112 mit kreisförmigem Querschnitt, dessen Stirnfläche 114 an die unmittelbar angrenzenden Bereiche der Außenkontur des Teilkammerträgers 10 formangepasst ist, einen sich an den vordern Absperrkolbenbereich 122 anschließenden und polygonal ausgebildeten mittleren Absperrkolbenbereich 116, einen sich an den mittleren Absperrkolbenbereich 116 anschließenden hinteren Absperrkolbenbereich 118 und einen sich an diesen anschließenden Absperrkolbenflansch 120, an dem eine Werkzeugeingrifföffnung 122 vorgesehen ist. Am Außenumfang des Absperrkolbens 110 ist eine sich in Längsrichtung des Absperrkolbens 110 erstreckende Absperrkolbennut 124 ausgebildet. Zur Aufnahme eines Absperrkolbeneinsetzteils, das dem in den FIG 10 bis 12 dargestellten Hülseneinsetzteil 58 entspricht, ist im hinteren Absperrkolbenbereich 118 eine Absperrkolbeneinsetzöffnung 126 vorgesehen. Ferner umfasst der Absperrkolben 110 analog zur Hülse 50 Gewindebohrungen 128 und Bohrungen 130 zum Fixieren des Absperrkolbeneinsetzteils.

Soll eine der Teilkammern 20a, b, c, d, e, f des Teilkammerträgers 10 blockiert werden, so wird der Absperrkolben 110 in die entsprechende Teilkammer 20a, b, c, d, e, f eingesetzt. Daraufhin wird ein Rastbolzen 26 durch den Teilkammerträger 10 in die Absperrkolbennut 124 geführt, so dass der Absperrkolben 110 drehfest in der Teilkammer 20a, b, c, d, e, f gehalten ist. Schließlich wird der Absperrkolben 110 mit einem in die Absperrkolbenrastöffnung des Absperrkolbeneinsetzteils eingreifenden Absperrriegel 28 innerhalb der Teilkammer 20a, b, c, d, e, f fixiert, so dass ein Kolbenhub des Absperrkolbens 110 verhindert wird. Soll der Absperrkolben 110 wieder aus der Teilkammer 20a, b, c, d, e, f entfernt werden, so werden der Rastbolzen 26 und der Absperrriegel 28 gelöst, woraufhin ein Werkzeug, beispielsweise in Form eines Aushebewerkzeuges, in der Werkzeugeingrifföffnung 122 angesetzt und der Absperrkolben 110 aus der Teilkammer 20a, b, c, d, e, f gehebelt werden kann.

## Patentansprüche

1. Teilkammerträger (10) für eine Teigteilmaschine, umfassend zumindest eine ein Teilkammervolumen definierende Teilkammer (20a-f) mit darin geführtem ersten Messkolben (32), der zum Abteilen von Teigvolumen antreibbar ist, und wenigstens eine in die Teilkammer (20a-f) einsetzbare und in dieser arretierbare, das Teilkammervolumen reduzierende Hülse (50) mit darin geführtem zweiten Messkolben (52; 90), **dadurch gekennzeichnet, dass** der erste Messkolben (32) und die Hülse (50) mit darin geführtem zweiten Messkolben (32) als separate und gegeneinander austauschbare Komponenten vorgesehen sind.

2. Teilkammerträger (10) nach Anspruch 1, **dadurch gekennzeichnet, dass** der erste Messkolben (32) einen vorderen Messkolbenbereich (34) mit einem einen ersten Messkolbendurchmesser aufweisenden kreisförmigen Querschnitt und einen mittleren Messkolbenbereich (38) mit einem einen zweiten Messkolbendurchmesser aufweisenden kreisförmigen Querschnitt umfasst, wobei der zweite Querschnitt kleiner als der erste Querschnitt ist, oder einen mittleren Messkolbenbereich (38) mit einem polygonalen Querschnitt umfasst, der insbesondere Konturabschnitte (40) aufweist, die auf einem Kreisbogen mit dem ersten Messkolbendurchmesser liegen.

3. Teilkammerträger (10) nach Anspruch 1 oder Anspruch 2, **dadurch gekennzeichnet, dass** am Außenumfang des ersten Messkolbens (32) eine sich in Längsrichtung des ersten Messkolbens (32) erstreckende Messkolbennut (46) ausgebildet ist und/oder dass am Außenumfang der Hülse (50) eine sich in Längsrichtung der Hülse erstreckende Hülsennut (56) ausgebildet ist und/oder dass am freien Ende des ersten Messkolbens (32) ein Messkolbenflansch (42) ausgebildet ist, an dem insbesondere eine Werkzeugeingrifföffnung (44) vorgesehen ist, und/oder dass am freien Ende der Hülse (50) ein Hülsenflansch (54) ausgebildet ist, an dem insbesondere eine Werkzeugeingrifföffnung vorgesehen ist.

4. Teilkammerträger (10) nach einem der vorhergehenden Ansprüche, **dadurch gekennzeichnet, dass** zur Arretierung der Hülse (50) in der Teilkammer (20a-f) ein eine insbesondere mit einer Schrägfläche (62) versehene Hülsenrastöffnung (64) definierendes, bevorzugt aus Metall hergestelltes Hülseneinsetzteil (58) in eine entsprechende, am Außenumfang der Hülse (50) vorgesehene Hülseneinsetzöffnung (60) eingesetzt ist.

5. Teilkammerträger (10) nach einem der vorhergehenden Ansprüche, **dadurch gekennzeichnet, dass** der in der Hülse (50) geführte zweite Messkolben (52; 90) am Außenumfang eine sich in Längsrichtung des Messkolbens erstreckende Führungsaussparung (70; 104) aufweist, die einen sich quer zur Längsrichtung erstreckenden Verriegelungsstift (72) aufnimmt und führt, der an der Hülse (50) festgelegt ist.

6. Teilkammerträger (10) nach Anspruch 5, **dadurch gekennzeichnet, dass** die Führungsaussparung (70; 104) durch einen mittleren Bereich des zweiten Messkolbens (90) mit polygonalem Querschnitt gebildet wird, wobei der polygonale Querschnitt zusammen mit dem Verriegelungsstift (72) bevorzugt eine eindeutige Positionierung des zweiten Messkolbens (90) innerhalb der Hülse (50) definiert.

7. Teilkammerträger (10) nach Anspruch 5 oder 6, **dadurch gekennzeichnet, dass** der Verriegelungsstift (72) in einer sich senkantenartig durch die Hülse (50), insbesondere durch den Hülsenflansch (54) erstreckenden Aufnahmebohrung (74) aufgenommen ist und/oder **dadurch gekennzeichnet, dass** der Verriegelungsstift (72) durch einen Gewindestift (76) festlegbar ist, der in einer sich quer zur Aufnahmebohrung (74) erstreckenden, in der Hülse (50) vorgesehenen Gewindebohrung (78) aufgenommen ist und in eine im Bereich des freien Endes des Verriegelungsstiftes (72) vorgesehene Umfangsnut (80) eingreift.

8. Teilkammerträger (10) nach einem der vorhergehenden Ansprüche, **dadurch gekennzeichnet, dass** ein Absperrkolben (110) vorgesehen ist, wobei vorzugsweise am Außenumfang des Absperrkolbens (110) eine sich in Längsrichtung des Absperrkolbens (110) erstreckende Absperrkolbennut (124) ausgebildet ist und/oder wobei vorzugsweise am freien Ende des Absperrkolbens (110) ein Absperrkolbenflansch (120) ausgebildet ist, an dem insbesondere eine Werkzeugeingrifföffnung (122) vorgesehen ist und/oder wobei vorzugsweise zur Arretierung des Absperrkolbens (110) in der Teilkammer (20a-f) ein eine insbesondere mit einer Schrägfläche versehene Absperrkolbenrastöffnung definierendes, bevorzugt aus Metall hergestelltes Absperrkolbeneinsetzteil in eine entsprechende, am Außenumfang des Absperrkolbens vorgesehene Absperrkolbeneinsetzöffnung eingesetzt ist.

9. Teilkammerträger (10) nach einem der vorhergehenden Ansprüche, **dadurch gekennzeichnet, dass** der in der Hülse (50) geführte zweite Messkolben (52; 90) aus POM hergestellt ist und/oder die Hülse (50) aus PET besteht und/oder **dadurch gekennzeichnet, dass** die Stirnfläche (56) des ersten Messkolbens (32) und/oder der Hülse (50) und/oder des zweiten Messkolbens (52; 90) und/oder des Absperrkolbens (110) an die unmittelbar angrenzenden Bereiche der Außenkontur des Teilkammerträgers (10) formangepasst ist/sind und/oder dass die Differenz zwischen dem Außenradius und dem Innenradius der Hülse (50) im Bereich von 7,5 bis 25 mm liegt.

## Claims

1. A dividing chamber carrier (10) for a dough dividing machine, comprising at least one dividing chamber (20a-f) that defines a dividing chamber volume, and in which a first metering piston (32) that is drivable for dividing dough volume is guided, and at least one sleeve (50) that is insertable into the dividing chamber (20a-f) and lockable in same, and that reduces the dividing chamber volume, and in which a second metering piston (52; 90) is guided, **characterized in that** the first metering piston (32) and the sleeve (50) with the second metering piston (32) [sic; (52; 90)] guided therein are provided as separate components that are replaceable with one another.

2. The dividing chamber carrier (10) according to Claim 1, **characterized in that** the first metering piston (32) includes a front metering piston area (34) with a circular cross section having a first metering piston diameter, and a middle metering piston area (38) with a circular cross section having a second metering piston diameter, wherein the second cross section is smaller than the first cross section, or includes a middle metering piston area (38) with a polygonal cross section which in particular has contour sections (40) that lie on a circular arc having the first metering piston diameter.

3. The dividing chamber carrier (10) according to Claim 1 or Claim 2, **characterized in that** a metering piston groove (46) that extends in the longitudinal direction of the first metering piston (32) is formed on the outer circumference of the first metering piston (32), and/or a sleeve groove (56) that extends in the longitudinal direction of the sleeve (50) is formed on the outer circumference of the sleeve, and/or a metering piston flange (42) on which in particular a tool engagement opening (44) is provided is formed on the free end of the first metering piston (32), and/or a sleeve flange (54) on which in particular a tool engagement opening is provided is formed on the free end of the sleeve (50).

4. The dividing chamber carrier (10) according to one of the preceding claims, **characterized in that** for locking the sleeve (50) in the dividing chamber (20a-f), a sleeve insert part (58), preferably made of metal, that defines a sleeve detent opening (64) provided in particular with an inclined surface (62) is inserted into a corresponding sleeve insert opening (60) provided on the outer circumference of the sleeve (50).

5. The dividing chamber carrier (10) according to one of the preceding claims, **characterized in that** the second metering piston (52; 90) that is guided in the sleeve (50) has on the outer circumference a guide recess (70; 104) that extends in the longitudinal direction of the metering piston, and that receives and guides a locking pin (72), fixed to the sleeve (50), which extends transversely with respect to the longitudinal direction.

6. The dividing chamber carrier (10) according to Claim 5, **characterized in that** the guide recess (70; 104) is formed by a middle area of the second metering piston (90) having a polygonal cross section, wherein the polygonal cross section together with the locking pin (72) preferably defines an unambiguous positioning of the second metering piston (90) within the sleeve (50).

7. The dividing chamber carrier (10) according to Claim 5 or 6, **characterized in that** the locking pin (72) is accommodated in a secant receptacle hole (74) that extends through the sleeve (50), in particular through the sleeve flange (54), and/or **characterized in that** the locking pin (72) is fixable by a threaded pin (76) that is accommodated in a threaded hole (78), provided in the sleeve (50), that extends transversely with respect to the receptacle hole (74) and that engages in a circumferential groove (80) provided in the area of the free end of the locking pin (72).

8. The dividing chamber carrier (10) according to one of the preceding claims, **characterized in that** a shut-off piston (110) is provided, wherein a shut-off piston groove (124) that extends in the longitudinal direction of the shut-off piston (110) is preferably formed on the outer circumference of the shut-off piston (110), and/or a shut-off piston flange (120) on which in particular a tool engagement opening (122) is provided is preferably formed on the free end of the shut-off piston (110), and/or a shut-off piston insert part, preferably made of metal, that defines a shut-off piston detent opening provided in particular with an inclined surface is inserted into a corresponding shut-off piston insert opening on the outer circumference of the shut-off piston in order to lock the shut-off piston (110) in the dividing chamber (20a-f).

9. The dividing chamber carrier (10) according to one of the preceding claims, **characterized in that** the second metering piston (52; 90) guided in the sleeve (50) is made of POM, and/or the sleeve (50) is made of PET, and/or **characterized in that** the end face (56) of the first metering piston (32) and/or of the sleeve (50) and/or of the second metering piston (52; 90) and/or of the shut-off piston (110) are/is dimensionally adapted to the directly adjoining areas of the outer contour of the dividing chamber carrier (10), and/or the difference between the outer radius and the inner radius of the sleeve (50) is in the range of 7.5 to 25 mm.

## Revendications

1. Support de chambre partielle (10), destiné à une machine à diviser la pâte, comprenant au moins une chambre partielle (20a-f), qui définit un volume de chambre partielle et dans laquelle est guidé un premier piston de mesure (32) pouvant être entraîné de manière à détacher des volumes de pâte, et au moins un manchon (50) qui peut être inséré dans la chambre partielle (20a-f) et bloqué dans celle-ci, qui réduit le volume de chambre partielle (50) et dans lequel est guidé un deuxième piston de mesure (52; 90), **caractérisé en ce que** le premier piston de mesure (32) et le manchon (50), dans lequel est guidé le deuxième piston de mesure (32), sont prévus sous la forme de composants séparés et mutuellement échangeables.

2. Support de chambre partielle (10) selon la revendication 1, **caractérisé en ce que** le premier piston de mesure (32) comprend une région de piston de mesure avant (34) à section transversale circulaire ayant un premier diamètre de piston de mesure et une région de piston de mesure médiane à section transversale circulaire ayant un deuxième diamètre de piston de mesure, la deuxième section transversale étant plus petite que la première section transversale ou une région de piston de mesure médiane (38) à section transversale polygonale comportant notamment des portions de contour (40) situées sur un arc de cercle ayant le premier diamètre de piston de mesure.

3. Support de chambre partielle (10) selon la revendication 1 ou la revendication 2, **caractérisé en ce qu'**une rainure de piston de mesure s'étendant dans la direction longitudinal du premier piston de mesure (32) est ménagée sur la périphérie extérieure du premier piston de mesure (32) et/ou **en ce qu'**une rainure de manchon (56) s'étendant dans la direction longitudinale du manchon est ménagée sur la périphérie extérieure du manchon (50) et/ou qu'une collerette de piston de mesure (42) est formé à l'extrémité libre du premier piston de mesure (32), collerette sur laquelle est notamment ménagée une ouverture d'engagement d'outil (44), et/ou **en ce qu'**une collerette de manchon (54) est formée à l'extrémité libre du manchon (50), collerette sur laquelle est notamment ménagée une ouverture d'engagement d'outil.

4. Support de chambre partielle (10) selon l'une des revendications précédentes, **caractérisé en ce que**, pour bloquer le manchon (50) dans la chambre partielle (20a-f), une partie d'insertion de manchon (58), de préférence en métal, définissant une ouverture de verrouillage de manchon (64) pourvue notamment d'une surface inclinée (62), est insérée dans une ouverture d'insertion de manchon (60) correspondante ménagée sur la périphérie extérieure du manchon (50).

5. Support de chambre partielle (10) selon l'une des revendications précédentes, **caractérisé en ce qu'**un deuxième piston de mesure (52; 90), guidé dans le manchon (50), comporte sur la périphérie extérieure un évidement de guidage (70 ; 104) qui s'étend dans la direction longitudinale du piston de mesure et qui reçoit et guide une tige de verrouillage (72) qui s'étend transversalement à la direction longitudinale et qui est fixée au manchon (50).

6. Support de chambre partielle (10) selon la revendication 5, **caractérisé en ce que** l'évidement de guidage (70; 104) est formé par une région médiane du deuxième piston de mesure (90) à section transversale polygonale, la section transversale polygonale définissant, conjointement avec la tige de verrouillage (72), de préférence un positionnement unique du deuxième piston de mesure (90) à l'intérieur du manchon (50).

7. Support de chambre partielle (10) selon la revendication 5 ou 6, **caractérisé en ce que** la tige de verrouillage (72) est reçue dans un alésage de réception (74) de type sécante qui s'étend à travers le manchon (50), en particulier à travers la collerette de manchon (54) et/ou **en ce que** la tige de verrouillage (72) peut être fixée par une tige filetée (76) qui est reçue dans un alésage fileté (78), ménagé dans le manchon (50) et s'étendant transversalement à l'alésage de réception (74), et s'engage dans une rainure périphérique (80) ménagée dans la région de l'extrémité libre la tige de verrouillage (72).

8. Support de chambre partielle (10) selon l'une des revendications précédentes, **caractérisé en ce qu'**il est prévu un piston d'arrêt (110), une rainure de piston d'arrêt (124), qui s'étend dans la direction longitudinale du piston d'arrêt (110), étant de préférence ménagée sur la périphérie extérieure du piston d'arrêt (110) et/ou une collerette de piston d'arrêt (120) étant de préférence formée à l'extrémité libre du piston d'arrêt (110), collerette sur laquelle est notamment ménagée une ouverture d'engagement d'outil (122) et/ou un élément d'insertion de piston d'arrêt, de préférence en métal, qui définit en particulier une ouverture de verrouillage de piston d'arrêt pourvue en particulier d'une surface inclinée, étant inséré dans une ouverture d'insertion de piston d'arrêt correspondante, ménagée à la périphérie du piston d'arrêt, de préférence pour bloquer le piston d'arrêt dans la chambre partielle (20a-f).

9. Support de chambre partielle (10) selon l'une des revendications précédentes, **caractérisé en ce que** le deuxième piston de mesure (52; 90) guidé dans le manchon (50) est fabriqué à partir de POM et/ou le manchon (50) est constitué de PET et/ou **en ce que** la face d'extrémité (56) du premier manchon de mesure (32) et/ou du manchon (50) et/ou du deuxième piston de mesure (52; 90) et/ou du piston d'arrêt (110) a une forme adaptée à celle des régions immédiatement adjacentes du contour extérieur du support de chambre partielle (10) et/ou **en ce que** la différence entre le rayon extérieur et le rayon intérieur du manchon (50) est dans la gamme allant de 7,5 et 25 mm.
